# EUROPÄISCHE PATENTANMELDUNG

(11) **EP 1 254 737 A1**
(43) Veröffentlichungstag der Anmeldung: **06.11.2002**
(21) Anmeldenummer: 02001868.5
(22) Anmeldetag: 28.01.2002
(51) Int. Cl.: B23K 37/047, B23K 26/02, B23K 26/10, B23K 26/24, B23K 10/02

(54) **Andrückvorrichtung und Verfahren zum Schweissen von Blechen**

(30) Priorität: 03.05.2001 AT 7082001
(71) Anmelder: VA TECH Transport- und Montagesysteme GmbH & Co, 4031 Linz (AT)
(72) Erfinder: Hiebl, Simon, 4050 Traun (AT)
(74) Vertreter: VA TECH Patente GmbH & Co

(57) **Zusammenfassung**

Beim kontaktlosen Schweißen von Blechen (9), beispielsweise Plasmaschweißen oder Laserschweißen, ist es erforderlich, sicherzustellen, dass die Blech (9) beim Schweißen spaltfrei aneinander liegen, um die erforderliche Qualität und Festigkeit der Schweißstelle zu erreichen. Dazu wird eine einfache Andrückvorrichtung offenbart, die diese Funktionalität sicherstellt.

## Beschreibung

Die vorliegende Erfindung betrifft eine Andrückvorrichtung für einen Schweißkopf, insbesondere einen Plasma- oder Laserschweißkopf, zum aneinander Drücken von zumindest zwei Blechen beim Schweißen, insbesondere Punktschweißen, wobei der Schweißkopf vor dem Schweißen in optimaler Schweißlage positioniert werden, sowie ein zugehöriges Verfahren und eine Anwendung der Andrückvorrichtung zum Punktschweißen von Fahrzeugkarosserien.

Beim kontaktlosen Schweißen von Blechen, wie beispielsweise Laser- oder Plasmaschweißen, ist es notwendig, dass die Bleche direkt aufeinander, spaltfrei zu liegen kommen, da ansonsten die Qualität der entstehenden Schweißstelle, insbesondere deren Festigkeit, nicht ausreichend ist. Zum Schweißen werden deshalb oft Andrückvorrichtungen verwendet, wie beispielsweise in der JP 53103949, in der ein Andrückrolle vor dem Schweißbrenner geführt wird, oder die SU 487 740 bei der links und rechts vom Schweißbrenner zwei Rollen auf die Bleche drücken.

Die vorliegende Erfindung stellt sich deshalb die Aufgabe, eine Andrückvorrichtung anzugeben, die einfach und kompakt aufgebaut ist, kostengünstig realisiert werden kann und trotzdem eine sichere, effektive Funktionalität gewährleistet.

Diese Aufgabe wird für die Vorrichtung und das Verfahren erfindungsgemäß dadurch gelöst, dass die Bleche in unmittelbarer Nähe der Schweißstelle mittels der Andrückvorrichtung selbsttätig mit einer einstellbaren, im Wesentlichen normal auf die Bleche wirkenden Kraft im Wesentlichen spaltfrei aneinander drückbar sind und die Kraft an mehreren Stellen ringförmig um die Schweißstelle herum in die Bleche eingeleitet wird.
Die Andrückvorrichtung kann somit den aktuellen Gegebenheiten einfach angepasst werden, wodurch immer ein optimaler Anpressdruck, unabhängig von der Positionierung des Schweißkopfes, einstellbar ist. Durch die ringförmige Krafteinleitung werden die Bleche um die gesamte Schweißstelle herum regelmäßig aneinander gedrückt, wodurch eine einwandfreie, spaltfreie Lage der Bleche gewährleistet ist.

Die Andrückvorrichtung besteht vorteilhaft aus einem gegenüber dem Schweißkopf festen und zumindest einem beweglichen Teil, wobei der bewegliche Teil aus zumindest einem Verbindungselement, das zumindest teilweise im Wesentlichen parallel zur Schweißkopfachse angeordnet ist, besteht und am den Blechen zugewandten Ende der Andrückvorrichtung mit einem Andrückelement verbunden sind. Mit dieser Ausführungsform erreicht man einen konstruktiv sehr einfachen Aufbau der Andrückvorrichtung.

Weiters ist es vorteilhaft, wenn das Andrückelement als Andrückring, oder alternativ als zumindest den Mündungsbereich des Schweißkopfes umgebende, der Form des umgebenden Teils des Schweißkopfes angepasste, Andrückhülse ausgeführt ist, wodurch sich eine ganz besonders regelmäßige Krafteinleitung um die Schweißstelle herum ergibt.

Wird das Verbindungselement durch zumindest zwei Stangen gebildet und ist an den Stangen jeweils ein Krafterzeuger so angeordnet, dass damit eine Kraft in Richtung der Bleche erzeugbar ist, erhält man eine konstruktiv sehr einfache und effektive Ausführungsform. Als Krafterzeuger können mechanische Federn, die über einen verstellbaren Anschlag auf die Stangen wirken, hydraulische oder pneumatische Zylinder wo ein Teil der Stangen deren Kolben sind oder elektromechanische Kraftelemente, vorgesehen sein.

Der feste Teil der Andrückvorrichtung in Verbindung mit an den Stangen befestigten, verstellbaren Anschlagelementen, beispielsweise Schraubmuttern, lässt sich vorteilhaft direkt als Anschlag nutzen, wodurch die Konstruktion der Andrückvorrichtung noch weiter vereinfacht wird.

Für die Funktionalität der Andrückvorrichtung ist es günstig, an der der Andrückvorrichtung abgewandten Seite der Bleche einen Gegenhalter vorzusehen, sodass die Bleche zwischen der Andrückvorrichtung und dem Gegenhalter zu liegen kommen und die Bleche beim Andrücken am Gegenhalter anliegen. Damit kann in jedem Fall sichergestellt werden, dass die Bleche wirklich aneinander gedrückt und nicht durchgedrückt werden, wobei der Spalt erhalten bleiben würde.

Der feste Teil der Andrückvorrichtung kann am Schweißkopf befestigt und mit diesem mitbewegbar sein oder alternativ auch an der Halterung für den Schweißkopf, insbesondere ein Roboterarm, befestigt und mit dieser mitbewegbar sein.

Da die Andrückvorrichtung in unmittelbarer Nähe zur Schweißstelle angreift, ist es vorteilhaft für die Andrückvorrichtung eine Kühlung vorzusehen, die die beim Schweißen übertragene Wärme ableitet. Diese Kühlung der Andrückvorrichtung wird sehr vorteilhaft in die Kühlung des Schweißkopfes integriert, wodurch nur eine zentrale Kühlmittelversorgung für Schweißkopf und Andrückvorrichtung notwendig ist.

Sehr vorteilhaft lässt sich die Andrückvorrichtung beim Punktschweißen von Fahrzeugkarosserien oder beim Schweißen von kurzen Steps an der Fahrzeugkarosserie, beispielsweise in Framing-Stationen, anwenden, wobei das Schweißwerkzeug und die Andrückvorrichtung von einem Roboterarm getragen und positioniert wird. Durch die Konstruktion der Andrückvorrichtung ist sichergestellt, dass an allen Schweißstellen die Bleche spaltfrei aneinander liegen bevor geschweißt wird, wodurch Schweißpunkte bzw.

Steps mit der erforderlichen Qualität und Festigkeit erzielt werden können. Insbesondere erspart man sich aufwendige Spanneinrichtungen zum sicheren, spaltfreien Spannen der zu verschweißenden Bleche, da diese Funktion von der Andrückvorrichtung wahrgenommen wird. Dies führt in weiterer Folge auch zu nicht unerheblichen Kosteneinsparungen, da anstelle von vielen aufwendigen Spanneinrichtungen nur eine einfache Andrückvorrichtung am Schweißkopf benötigt wird.

Die gegenständliche Erfindung wird anhand der beispielhaften, nicht einschränkenden, eine mögliche Ausführungsvariante zeigende Figuren 1 bis 3 beschrieben. Dabei zeigt
Fig. 1 einen Aufriss einer erfindungsgemäßen Andrückvorrichtung beim Positionieren des Scheißkopfes,
Fig. 2 einen Aufriss einer erfindungsgemäßen Andrückvorrichtung nach dem aneinander Drücken der Bleche und
Fig. 3 eine Draufsicht einer erfindungsgemäßen Andrückvorrichtung.

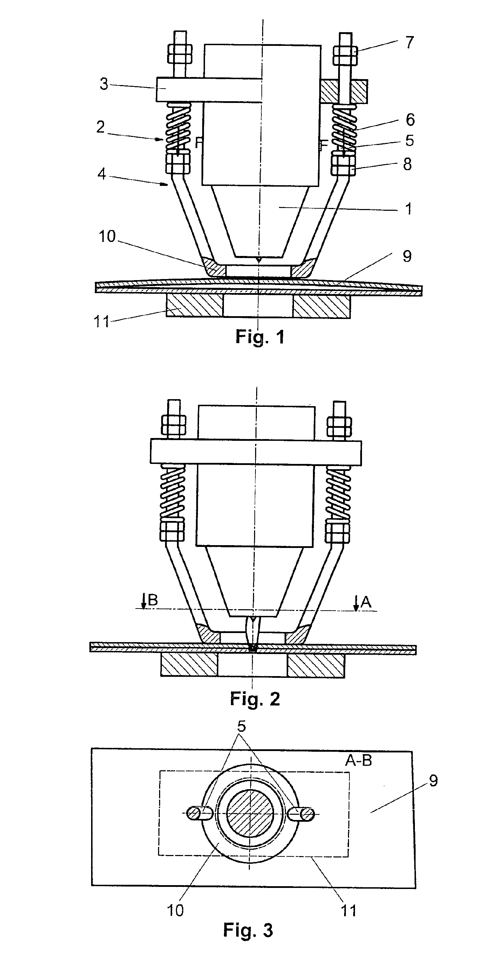

In Fig. 1 sind zwei Bleche 9 gezeigt, die punktverschweißt werden sollen. Der Plasmaschweißkopf 1 ist bereits schweißgerecht, d.h. in einem optimalen Abstand zum obersten der Bleche 9, positioniert. Allerdings ist das obere der beiden Bleche 9 nicht eben, z.B. aufgrund von Produktionsfehlern, oder Fertigungstoleranzen, weshalb zwischen den beiden Blechen 9 ein Spalt entsteht. Dieser Spalt würde sich beim Schweißen, hier Punktschweißen, negativ auf die Qualität, insbesondere auf die Festigkeit dieses Schweißpunktes, auswirken. Am Plasmaschweißkopf 1 ist eine Andrückvorrichtung 2 befestigt, die aus einem direkt mit dem Plasmaschweißkopf 1 verbundenen festen Teil 3 und einem beweglichen Teil 4 besteht. Der bewegliche Teil 4 setzt sich bei diesen Beispiel aus zwei zur Achse des Plasmaschweißkopfes 1 parallelen Stangen 5, die an ihren den Blechen 9 zugewandten Seiten mit einem Andrückring 10 verbunden sind, zusammen. Um den Anpressdruck möglichst nahe beim Schweißpunkt einzuleiten sind die Stangen 5 im Mündungsbereich des Plasmaschweißkopfes 1 parallel zur äußeren Form des Plasmaschweißkopfes 1 geformt. Die Stangen 5 werden im festen Teil 3 der Andrückvorrichtung 2 geführt. Auf die Stangen 5 wirken über Einstellmuttern 8 mechanische Federn 6, die zwischen dem festen Teil 3, am den Blechen abgewandten Ende der Stangen 5, und einer Einstellmutter 8, am den Blechen zugewandten Ende der Stangen 5 angeordnet sind und so eine mechanische Kraft F in Richtung der Bleche 9 ausüben. Der feste Teil 3 dient gleichzeitig als Anschlag für den beweglichen Teil 4 der Andrückvorrichtung 2. Dazu sind die Stangen 5 durch den festen Teil 3 durchgeführt und weisen an ihren den Blechen 9 abgewandten Ende einstellbare Anschlagmuttern 7 auf, die somit den möglichen Hub des beweglichen Teils 4 der Andrückvorrichtung 2 in Richtung der Bleche 9 limitieren und gleichzeitig dafür sorgen, dass die Andrückvorrichtung 2 außerhalb eines Einsatzes zusammengehalten wird.

Die Federn 6 sind durch die Einstellmuttern 8 auf ein bestimmtes Maß vorgespannt. Die Vorspannung ergibt sich beispielsweise aus der erwünschten Anpresskraft F für den Fall, dass die Bleche 9 von Haus aus schon spaltfrei aneinander liegen. Liegen die Bleche 9 nicht spaltfrei aneinander werden nach der Positionierung des Plasmaschweißkopfes 1, womit gleichzeitig auch die Andrückvorrichtung 2 positioniert wird, die beiden Federn 6 weiter gespannt. Die beiden Federn 6 entspannen sich in Folge und drücken so die beiden Bleche 9 spaltfrei aneinander, wie in Fig. 2 dargestellt, woraufhin die Punktschweißung durchgeführt werden kann.
Unter gewissen Umständen kann es erforderlich sein, an der Gegenseite der Andrückvorrichtung 2 einen Gegenhalter 11 vorzusehen, um zu verhindern, dass die Bleche 9 anstatt aneinander gedrückt zu werden, durchgedrückt werden und der Spalt somit erhalten bleiben würde. Dies ist zum Beispiel der Fall, wenn das verformte Blech eine höhere Steifigkeit aufweist wie das ebene Blech. Um die Schweißstelle ist der Gegenhalter 11 ausgenommen, damit ungehindert geschweißt werden kann. Die Gegenhalter 11 können auch direkt in die Haltevorrichtungen für die Bleche 9, z.B. Spannrahmen, integriert sein, welcher starr oder mit einer Kraft beaufschlagt und bewegbar sein kann.

Die Fig. 3 zeigt einen Schnitt A-B durch die Andrückvorrichtung 2 knapp über dem obersten Blech 9. In diesem Beispiel sind zwei Stangen 5 mit einem Andrückring 10 verbunden. Natürlich kann eine beliebige Anzahl von Stangen 5 um den Schweißkopf 1 vorgesehen werden. An der Unterseite der Bleche 9 ist der Gegenhalter 11 zu erkennen.

Die Andrückvorrichtung 2 wird in diesem Beispiel nur zum Punktschweißen der Bleche 9 verwendet. Die Andrückvorrichtung 2 könnte aber natürlich auch zum Schweißen von kurzen Steps eingesetzt werden und nach kleinen Adaptionen, insbesondere des Andrückelements, können damit auch Schweißnähte geschweißt werden. Als Steps werden dabei durchgängige kurze Schweißnähte bezeichnet und weisen in der Regel eine Länge zwischen 0.5 und 6cm auf. Das Andrückelement muss dann so ausgeführt sein, dass große Bewegungen des Schweißkopfes 1 entlang einer Schweißnaht möglich sind und trotzdem die Funktionalität sichergestellt wird, ohne die Blechoberfläche zu beeinträchtigen. Beispielsweise kann das Andrückelement an der den Blechen zugewandten Seite eine Anzahl von drehbar gelagerten Kugelelementen, ähnlich eines Kugellagers, aufweisen, wodurch die freie Beweglichkeit gegeben ist.

## Patentansprüche

1. Andrückvorrichtung für einen Schweißkopf, insbesondere einen Plasma- oder Laserschweißkopf, zum aneinander Drücken von zumindest zwei Blechen beim Schweißen, insbesondere Punktschweißen, wobei der Schweißkopf vor dem Schweißen in optimaler Schweißlage positioniert werden, **dadurch gekennzeichnet, dass** die Bleche in unmittelbarer Nähe der Schweißstelle mittels der Andrückvorrichtung selbsttätig mit einer einstellbaren, im Wesentlichen normal auf die Bleche wirkenden Kraft im Wesentlichen spaltfrei aneinander drückbar sind **und dass** die Kraft an mehreren Stellen ringförmig um die Schweißstelle herum in die Bleche einleitbar ist.

2. Andrückvorrichtung nach Anspruch 1, **dadurch gekennzeichnet, dass** die Andrückvorrichtung gegenüber dem Schweißkopf aus einem festen und zumindest einem beweglichen Teil besteht.

3. Andrückvorrichtung nach Anspruch 1 oder 2, **dadurch gekennzeichnet, dass** der bewegliche Teil aus zumindest einem Verbindungselement, das zumindest teilweise im Wesentlichen parallel zur Schweißkopfachse angeordnet ist, besteht und am den Blechen zugewandten Ende der Andrückvorrichtung mit einem Andrückelement verbunden ist.

4. Andrückvorrichtung nach Anspruch 3, **dadurch gekennzeichnet, dass** das Andrückelement als Andrückring ausgeführt ist.

5. Andrückvorrichtung nach Anspruch 3, **dadurch gekennzeichnet, dass** das Andrückelement als Andrückhülse ausgeführt ist, die zumindest den Mündungsbereich des Schweißkopfes umgibt.

6. Andrückvorrichtung nach Anspruch 5, **dadurch gekennzeichnet, dass** die Form der Andrückhülse im Wesentlich der Form des umgebenden Teils des Schweißkopfes entspricht.

7. Andrückvorrichtung nach einem der Ansprüche 3 bis 6, **dadurch gekennzeichnet, dass** das Verbindungselement durch zumindest zwei Stangen gebildet ist, an welchen jeweils ein Krafterzeuger so angeordnet ist, dass damit eine Kraft in Richtung der Bleche erzeugbar ist.

8. Andrückvorrichtung nach Anspruch 7, **dadurch gekennzeichnet, dass** die Stangen im festen Teil geführt sind.

9. Andrückvorrichtung nach einem der Ansprüche 1 bis 8, **dadurch gekennzeichnet, dass** als Krafterzeuger mechanische Federn vorgesehen sind.

10. Andrückvorrichtung nach Anspruch 9, **dadurch gekennzeichnet, dass** die Federn über einen verstellbaren Anschlag, beispielsweise Schraubmuttern, auf die Stangen wirken.

11. Andrückvorrichtung nach einem der Ansprüche 1 bis 10, **dadurch gekennzeichnet, dass** als Krafterzeuger hydraulische oder pneumatische Zylinder vorgesehen sind.

12. Andrückvorrichtung nach Anspruch 11, **dadurch gekennzeichnet, dass** ein Teil der Stangen als Kolben der hydraulischen oder pneumatischen Zylinder ausgebildet sind.

13. Andrückvorrichtung nach einem der Ansprüche 1 bis 12, **dadurch gekennzeichnet, dass** als Krafterzeuger elektromechanische Elemente, beispielsweise Elektromagnete, vorgesehen sind.

14. Andrückvorrichtung nach einem der Ansprüche 2 bis 13, **dadurch gekennzeichnet, dass** der feste Teil der Andrückvorrichtung in Verbindung mit an den Stangen befestigten, verstellbaren Anschlagelementen, beispielsweise Schraubmuttern, als Anschlag dient.

15. Andrückvorrichtung nach einem der Ansprüche 1 bis 14, **dadurch gekennzeichnet, dass** an der der Andrückvorrichtung abgewandten Seite der Bleche ein Gegenhalter vorgesehen ist, sodass die Bleche zwischen der Andrückvorrichtung und dem Gegenhalter zu liegen kommen und die Bleche beim Andrücken am Gegenhalter anliegen.

16. Andrückvorrichtung nach einem der Ansprüche 1 bis 15, **dadurch gekennzeichnet, dass** der feste Teil der Andrückvorrichtung am Schweißkopf befestigt ist und mit diesem mitbewegbar ist.

17. Andrückvorrichtung nach einem der Ansprüche 1 bis 16, **dadurch gekennzeichnet, dass** der feste Teil der Andrückvorrichtung an der Halterung für den Schweißkopf, insbesondere ein Roboterarm, befestigt ist und mit dieser mitbewegbar ist.

18. Andrückvorrichtung nach einem der Ansprüche 1 bis 17, **dadurch gekennzeichnet, dass** für die Andrückvorrichtung eine Kühlung vorgesehen ist.

19. Andrückvorrichtung nach Anspruch 18, **dadurch gekennzeichnet, dass** die Kühlung der Andrückvorrichtung in die Kühlung des Schweißkopfes integriert ist.

20. Anwendung der Andrückvorrichtung nach einem der Ansprüche 1 bis 19 zum Punktschweißen von Fahrzeugkarosserien oder zum Schweißen von kurzen Steps, vorzugsweise von 0,5 bis 6cm Länge, an Fahrzeugkarosserien, beispielsweise in Framing-Stationen, wobei das Schweißwerkzeug und die Andrückvorrichtung von einem Roboterarm getragen und positioniert wird.

21. Verfahren zum aneinander Drücken von zumindest zwei Blechen beim Schweißen, insbesondere beim Laser- oder Plasma-Punktschweißen, mittels einer Andrückvorrichtung, **dadurch gekennzeichnet, dass** die Bleche in unmittelbarer Nähe der Schweißstelle mittels der Andrückvorrichtung selbsttätig mit einer einstellbaren, im Wesentlichen normal auf die Bleche wirkenden Kraft, die an mehreren Stellen ringförmig um die Schweißstelle herum in die Bleche eingeleitet wird, im Wesentlichen spaltfrei aneinander gedrückt werden.

22. Verfahren nach Anspruch 21, **dadurch gekennzeichnet, dass** die Kraft durch mechanische Federn erzeugt wird.

23. Verfahren nach Anspruch 21 oder 22, **dadurch gekennzeichnet, dass** die Kraft durch hydraulische oder pneumatische Elemente erzeugt wird.

24. Verfahren nach einem der Ansprüche 21 bis 23, **dadurch gekennzeichnet, dass** die Kraft durch elektromechanische Elemente erzeugt wird.

25. Verfahren nach einem der Ansprüche 21 bis 24, **dadurch gekennzeichnet, dass** beim Positionieren des Schweißkopfes in die optimale Schweißlage die Bleche durch einen bezüglich des Schweißkopfes beweglichen Teil der Andrückvorrichtung aneinander gedrückt werden.

26. Verfahren nach Anspruch 25, **dadurch gekennzeichnet, dass** die Kraft von einem gegenüber dem Schweißkopf festen Teil der Andrückvorrichtung auf den beweglichen Teil der Andrückvorrichtung übertragen wird.

27. Verfahren nach einem der Ansprüche 21 bis 26, **dadurch gekennzeichnet, dass** die Bleche von der Andrückvorrichtung gegen einen Gegenhalter gedrückt werden.

28. Verfahren nach einem der Ansprüche 21 bis 27, **dadurch gekennzeichnet, dass** die Andrückvorrichtung gekühlt wird.
